# EUROPEAN PATENT APPLICATION

(11) **EP 4 576 502 A1**
(43) Date of publication of application: **25.06.2025**
(21) Application number: 23882485.8
(22) Date of filing: 16.10.2023
(51) Int. Cl.: H02K 1/276

(54) **ROTOR**

(30) Priority: 27.10.2022 JP 2022172716
(71) Applicant: AISIN CORPORATION, Kariya-shi, Aichi 448-8650 (JP)
(72) Inventor: KIDO, Yushi, Kariya-shi, Aichi 448-8650 (JP); IDEUE, Shigeki, Kariya-shi, Aichi 448-8650 (JP)
(74) Representative: Kramer Barske Schmidtchen Patentanwälte PartG mbB
(86) International application number: PCT/JP2023/037447
(87) International publication number: WO 2024/090279

(57) **Abstract**

In this rotor, when viewed in an axial direction, a side surface of a magnet insertion hole is provided with a first straight line that forms a bridge portion, a second straight line disposed so as to extend in a direction along a long side of a permanent magnet, a first arc-shaped portion connected to the first straight line and disposed between the first straight line and the second straight line, a second arc-shaped portion connected to the second straight line and disposed between the first straight line and the second straight line, and an inter-arc straight line portion connected to the first arc-shaped portion and to the second arc-shaped portion.

## Description

### TECHNICAL FIELD

The present invention relates to a rotor.

### BACKGROUND ART

Hitherto, there is known a rotor including a rotor core that includes bridge portions provided so as to adjoin magnet insertion holes. Such a rotor is disclosed in, for example, Japanese Unexamined Patent Application Publication No. 2021-136785 (JP 2021-136785 A).

JP 2021-136785 A discloses a rotor including a rotor core that includes magnet through holes (magnet insertion holes) in which permanent magnets are disposed and partition portions (bridge portions) provided so as to adjoin the magnet through holes. In the rotor described in JP 2021-136785 A, the partition portions are provided so that, when viewed in an axial direction, their widths are minimized within a range in which the mechanical strength of the rotor core can be secured. In the rotor described in Patent Document 1, when viewed in the axial direction, the side surface of the magnet through hole is provided with a straight line (first straight line) that forms the bridge portion, a straight line (second straight line) disposed so as to extend in a direction along the long side of the permanent magnet, and an arc-shaped portion connected to the first straight line and to the second straight line.

### Related Art Documents

### Patent Documents

Patent Document 1: Japanese Unexamined Patent Application Publication

### SUMMARY OF THE INVENTION

### Problem to be Solved by the Invention

Although description is not clearly given in JP 2021-136785 A, it is considered, in the conventional rotor as described in JP 2021-136785 A, that the arc-shaped portion is connected to the first straight line and the second straight line so that the first straight line and the second straight line are tangents to a circle corresponding to the arc-shaped portion in order that the connection portion between the arc-shaped portion and the first straight line and the connection portion between the arc-shaped portion and the second straight line are not angular. In this case, as the radius of the circle corresponding to the arc-shaped portion changes within a tolerance range (manufacturing deviation range), the position of the connection portion where the arc-shaped portion and the first straight line are connected and the position of the connection portion where the arc-shaped portion and the second straight line are connected change. That is, the position of the arc-shaped portion of the magnet insertion hole changes. In particular, when the angle between the first straight line and the second straight line is relatively small, the change in the position of the arc-shaped portion is relatively large. Along with this, the shape (width or length) of the bridge portion formed by the first straight line connected to the arc-shaped portion changes. In the rotor described in JP 2021-136785 A, the bridge portion is provided so that, when viewed in the axial direction, the width is minimized within the range in which the mechanical strength of the rotor core can be secured. Therefore, when the shape of the bridge portion changes, the variation in the mechanical strength of the rotor core increases. When the shape of the bridge portion changes, magnetic flux leakage may occur at the bridge portion. Therefore, there is a demand for a rotor that can suppress the increase in the variation in the mechanical strength of the rotor core and the occurrence of magnetic flux leakage at the bridge portion due to the change in the shape of the bridge portion.

The present invention has been made to solve the above problems, and one object of the present invention is to provide a rotor that can suppress an increase in variation in the mechanical strength of a rotor core and the occurrence of magnetic flux leakage at a bridge portion due to a change in the shape of the bridge portion.

### Means for Solving the Problem

In order to achieve the above object, a rotor according to one aspect of the present invention includes a rotor core including a magnet insertion hole and a bridge portion provided so as to adjoin the magnet insertion hole, and a permanent magnet disposed in the magnet insertion hole. When viewed in an axial direction, a side surface of the magnet insertion hole is provided with a first straight line that forms the bridge portion, a second straight line disposed so as to extend in a direction along a long side of the permanent magnet, a first arc-shaped portion connected to the first straight line and disposed between the first straight line and the second straight line, a second arc-shaped portion connected to the second straight line and disposed between the first straight line and the second straight line, and an inter-arc straight line portion connected to the first arc-shaped portion and to the second arc-shaped portion or an inter-arc curved line portion connected to the first arc-shaped portion and to the second arc-shaped portion and having a smaller curvature than the first arc-shaped portion and the second arc-shaped portion. The term "direction along the long side of the permanent magnet" is herein a broad concept that includes both the direction of the long side of the permanent magnet itself and a direction relatively close to the direction of the long side of the permanent magnet.

In the rotor according to the one aspect of the present invention, as described above, when viewed in the axial direction, the side surface of the magnet insertion hole is provided with the first straight line that forms the bridge portion, the second straight line disposed so as to extend in the direction along the long side of the permanent magnet, the first arc-shaped portion connected to the first straight line and disposed between the first straight line and the second straight line, the second arc-shaped portion connected to the second straight line and disposed between the first straight line and the second straight line, and the inter-arc straight line portion connected to the first arc-shaped portion and to the second arc-shaped portion or the inter-arc curved line portion connected to the first arc-shaped portion and to the second arc-shaped portion and having a smaller curvature than the first arc-shaped portion and the second arc-shaped portion. Therefore, two arc-shaped portions, that is, the first arc-shaped portion connected to the first straight line and to the inter-arc straight line portion or the inter-arc curved line portion and the second arc-shaped portion connected to the second straight line and to the inter-arc straight line portion or the inter-arc curved line portion, can be formed between the first straight line and the second straight line on the side surface of the magnet insertion hole. In this case, the inter-arc straight line portion or the tangent at the connection portion between the inter-arc curved line portion and the first arc-shaped portion and the tangent at the connection portion between the inter-arc curved line portion and the second arc-shaped portion extend in directions intersecting the first straight line and the second straight line. Thus, the angle formed by the first straight line and the inter-arc straight line portion or the tangent at the connection portion between the inter-arc curved line portion and the first arc-shaped portion and the angle formed by the second straight line and the inter-arc straight line portion or the tangent at the connection portion between the inter-arc curved line portion and the second arc-shaped portion are larger than the angle formed by the first straight line and the second straight line. The amount of change in the position of the arc-shaped portion in the protruding direction of the arc-shaped portion as the radius of a circle corresponding to the arc-shaped portion changes within a tolerance range (manufacturing deviation range) increases as the absolute value of an angle formed by a straight line connected to one end of the arc-shaped portion and a straight line connected to the other end of the arc-shaped portion or an angle formed by the straight line connected to the one end of the arc-shaped portion and the tangent at the connection portion between the arc-shaped portion and a curved line connected to the other end of the arc-shaped portion and having a smaller curvature than the arc-shaped portion is closer to 0° (decreases). Therefore, the amount of change in the shape of the bridge portion formed by the first straight line as the radius of the circle corresponding to the arc-shaped portion changes within the tolerance range can be reduced compared to a case where only one arc-shaped portion is provided between the first straight line and the second straight line on the side surface of the magnet insertion hole. As a result, it is possible to suppress an increase in variation in the mechanical strength of the rotor core and the occurrence of magnetic flux leakage at the bridge portion due to the change in the shape of the bridge portion.

In the rotor according to the one aspect, an angle formed by the first straight line and the second straight line is preferably an acute angle.

With this configuration, the angle formed by the first straight line and the second straight line is the relatively small acute angle. Therefore, the amount of change in the shape of the bridge portion formed by the first straight line as the radius of the circle corresponding to the arc-shaped portion changes within the tolerance range is relatively large when only one arc-shaped portion is provided between the first straight line and the second straight line on the side surface of the magnet insertion hole. Therefore, the amount of change in the shape of the bridge portion formed by the first straight line as the radius of the circle corresponding to the arc-shaped portion changes within the tolerance range (manufacturing deviation range) can be reduced effectively.

In the rotor according to the one aspect, an angle formed by the first straight line and the inter-arc straight line portion or a tangent at a connection portion between the inter-arc curved line portion and the first arc-shaped portion and an angle formed by the second straight line and the inter-arc straight line portion or a tangent at a connection portion between the inter-arc curved line portion and the second arc-shaped portion are preferably obtuse angles.

With this configuration, the angle formed by the first straight line and the inter-arc straight line portion or the tangent at the connection portion between the inter-arc curved line portion and the first arc-shaped portion and the angle formed by the second straight line and the tangent at the connection portion between the inter-arc straight line portion and the second arc-shaped portion are the relatively large obtuse angles. Therefore, the amount of change in the shape of the bridge portion formed by the first straight line as the radius of the circle corresponding to the arc-shaped portion changes within the tolerance range (manufacturing deviation range) can be reduced sufficiently.

In the rotor according to the one aspect, the first straight line is preferably provided so as to adjoin a clearance in the magnet insertion hole where the permanent magnet is not disposed.

In this configuration, the bridge portion formed by the first straight line is provided so as to adjoin the clearance in the magnet insertion hole. Therefore, the change in the shape affects the mechanical strength of the rotor core particularly greatly. Therefore, the amount of change in the shape of the bridge portion formed by the first straight line as the radius of the circle corresponding to the arc-shaped portion changes within the tolerance range (manufacturing deviation range) can be reduced effectively.

In the rotor according to the one aspect, the first straight line is preferably provided so as to form the bridge portion located between the magnet insertion holes that are adjacent to each other and disposed in a V-shape.

With this configuration, the angle formed by the second straight line and the first straight line that forms the bridge portion located between the magnet insertion holes that are adjacent to each other and disposed in the V-shape is the relatively small acute angle. Therefore, the amount of change in the shape of the bridge portion formed by the first straight line as the radius of the circle corresponding to the arc-shaped portion changes within the tolerance range (manufacturing deviation range) can be reduced effectively.

### BRIEF DESCRIPTION OF THE DRAWINGS

[FIG. 1] FIG. 1 is a plan view showing a rotor according to a first embodiment of the present invention.
[FIG. 2] FIG. 2 is a plan view showing a first straight line, a second straight line, a first arc-shaped portion, a second arc-shaped portion, and an inter-arc straight line portion in each of a magnet insertion hole and a cutout of the rotor according to the first embodiment of the present invention.
[FIG. 3] FIG. 3 is a diagram illustrating a change in the position of the arc-shaped portion as the radius of a circle corresponding to the arc-shaped portion changes within a tolerance range.
[FIG. 4] FIG. 4 is a plan view showing a first straight line, a second straight line, a first arc-shaped portion, a second arc-shaped portion, and an inter-arc curved line portion in each of a magnet insertion hole and a cutout of a rotor according to a second embodiment of the present invention.
[FIG. 5] FIG. 5 is a plan view showing a first straight line, a second straight line, a first arc-shaped portion, a second arc-shaped portion, and an inter-arc straight line portion in each of a magnet insertion hole and a cutout of a rotor according to a comparative example.

### MODES FOR CARRYING OUT THE INVENTION

Hereinafter, embodiments of the present invention will be described with reference to the drawings.

### [First Embodiment]

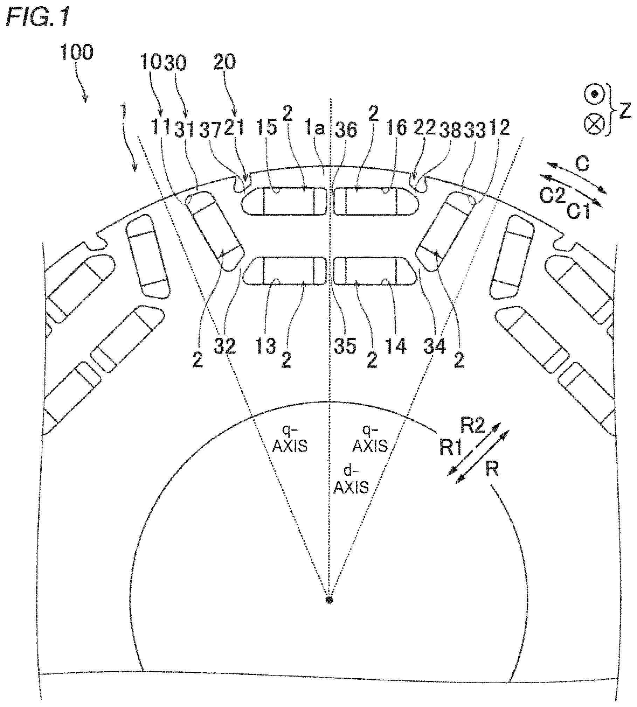

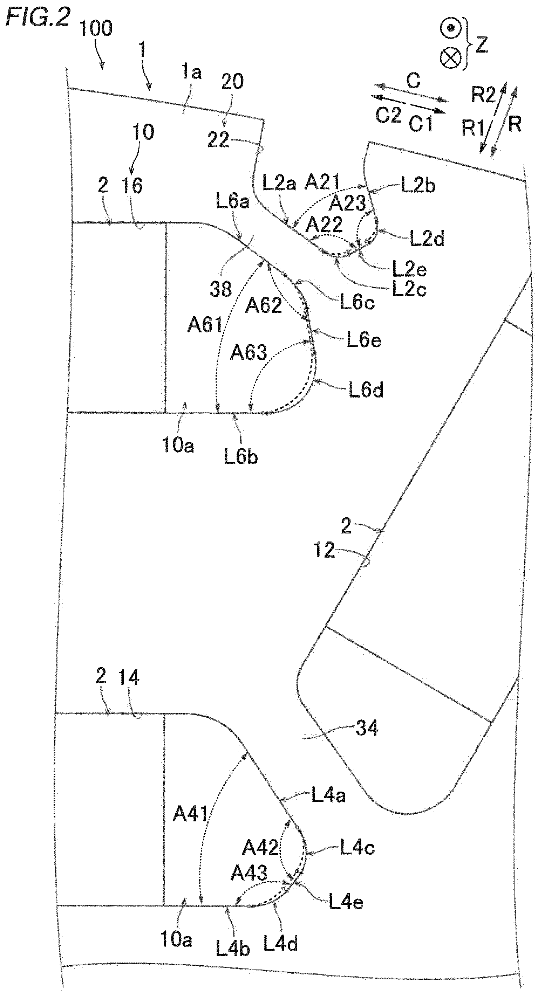

The configuration of a rotor 100 according to a first embodiment of the present invention will be described with reference to FIGS. 1 and 2.

In the following description, an axial direction, a radial direction, and a circumferential direction of the rotor 100 (see FIG. 1) are defined as "Z direction," "R direction," and "C direction," respectively. The inner side and the outer side in the radial direction (R direction) of the rotor 100 are defined as "R1 side" and "R2 side," respectively. One side and the other side in the circumferential direction (C direction) of the rotor 100 are defined as "C1 side" and "C2 side," respectively.

### (Overall Configuration of Rotor)

As shown in FIG. 1, the rotor 100 has an annular shape. The rotor 100 together with a stator (not shown) disposed on the R2 side of the rotor 100 so as to face the rotor 100 constitutes an inner rotor type rotary electric machine (not shown). For example, the rotary electric machine is a motor, a generator, or a motor generator.

The rotor 100 includes a rotor core 1. The rotor core 1 is formed by stacking a plurality of electrical steel sheets (e.g., silicon steel sheets) in the Z direction.

### <Configuration of Magnet Insertion Hole>

The rotor core 1 includes magnet insertion holes 10. The magnet insertion hole 10 extends through the rotor core 1 in the Z direction. A plurality of magnet insertion holes 10 is provided in a portion of the rotor core 1 on the R2 side.

The magnet insertion holes 10 include a first magnet insertion hole 11, a second magnet insertion hole 12, a third magnet insertion hole 13, a fourth magnet insertion hole 14, a fifth magnet insertion hole 15, and a sixth magnet insertion hole 16. One set of the first magnet insertion hole 11, the second magnet insertion hole 12, the third magnet insertion hole 13, the fourth magnet insertion hole 14, the fifth magnet insertion hole 15, and the sixth magnet insertion hole 16 corresponds to one magnetic pole in the rotor core 1.

The first magnet insertion hole 11 is disposed on the C1 side of a q-axis so that the longitudinal direction of the first magnet insertion hole 11 corresponds to the R direction.

The second magnet insertion hole 12 is disposed on the C2 side of the q-axis so that the longitudinal direction of the second magnet insertion hole 12 corresponds to the R direction.

The third magnet insertion hole 13 is disposed on a d-axis side of the first magnet insertion hole 11 so as to extend along the C direction. The end of the third magnet insertion hole 13 on the C1 side is disposed near the d-axis. The end of the third magnet insertion hole 13 on the C2 side is disposed near the end of the first magnet insertion hole 11 on the R1 side. That is, the first magnet insertion hole 11 and the third magnet insertion hole 13 are disposed in a V-shape.

The fourth magnet insertion hole 14 is disposed on the d-axis side of the second magnet insertion hole 12 so as to extend along the C direction. The end of the fourth magnet insertion hole 14 on the C2 side is disposed near the d-axis so as to face the end of the third magnet insertion hole 13 on the C1 side. The end of the fourth magnet insertion hole 14 on the C1 side is disposed near the end of the second magnet insertion hole 12 on the R1 side. That is, the second magnet insertion hole 12 and the fourth magnet insertion hole 14 are disposed in a V-shape.

The fifth magnet insertion hole 15 is disposed on the R2 side of the third magnet insertion hole 13. The fifth magnet insertion hole 15 is disposed on the C2 side of the d-axis so as to extend along the C direction. The end of the fifth magnet insertion hole 15 on the C1 side is disposed near the d-axis.

The sixth magnet insertion hole 16 is disposed on the R2 side of the fourth magnet insertion hole 14. The sixth magnet insertion hole 16 is disposed on the C1 side of the d-axis so as to extend along the C direction. The end of the sixth magnet insertion hole 16 on the C2 side is disposed near the d-axis so as to face the end of the fifth magnet insertion hole 15 on the C1 side.

### <Configuration of Cutout>

The rotor core 1 includes cutouts 20. The cutout 20 extends through the rotor core 1 in the Z direction. The cutout 20 is formed in an outer circumferential portion 1a of the rotor core 1. The cutout 20 is formed along the R direction.

### The cutouts 20 include a first cutout 21 and a second cutout 22.

The end of the first cutout 21 on the R1 side is disposed near the end of the fifth magnet insertion hole 15 on the C2 side. That is, the first cutout 21 and the fifth magnet insertion hole 15 are disposed in a V-shape.

The end of the second cutout 22 on the R1 side is disposed near the end of the sixth magnet insertion hole 16 on the C1 side. That is, the second cutout 22 and the sixth magnet insertion hole 16 are disposed in a V-shape.

### <Configuration of Bridge Portion>

The rotor core 1 includes bridge portions 30. The bridge portion 30 is provided so as to adjoin the magnet insertion hole 10. The bridge portion 30 is formed so as to have a relatively small width when viewed in the Z direction within a range in which the mechanical strength of the rotor core 1 can be secured.

The bridge portions 30 include a first bridge portion 31, a second bridge portion 32, a third bridge portion 33, a fourth bridge portion 34, a fifth bridge portion 35, a sixth bridge portion 36, a seventh bridge portion 37, and an eighth bridge portion 38.

The first bridge portion 31 is provided between the end of the first magnet insertion hole 11 on the R2 side and the outer circumferential surface of the rotor core 1.

The second bridge portion 32 is provided between the end of the first magnet insertion hole 11 on the R1 side and the end of the third magnet insertion hole 13 on the C2 side. That is, the second bridge portion 32 is located between the first magnet insertion hole 11 and the third magnet insertion hole 13 that are adjacent to each other and disposed in the V-shape.

The third bridge portion 33 is provided between the end of the second magnet insertion hole 12 on the R2 side and the outer circumferential surface of the rotor core 1.

The fourth bridge portion 34 is provided between the end of the second magnet insertion hole 12 on the R1 side and the end of the fourth magnet insertion hole 14 on the C1 side. That is, the fourth bridge portion 34 is located between the second magnet insertion hole 12 and the fourth magnet insertion hole 14 that are adjacent to each other and disposed in the V-shape.

The fifth bridge portion 35 is provided between the end of the third magnet insertion hole 13 on the C1 side and the end of the fourth magnet insertion hole 14 on the C2 side.

The sixth bridge portion 36 is provided between the end of the fifth magnet insertion hole 15 on the C1 side and the end of the sixth magnet insertion hole 16 on the C2 side.

The seventh bridge portion 37 is provided between the end of the fifth magnet insertion hole 15 on the C2 side and the end of the first cutout 21 on the R1 side. That is, the seventh bridge portion 37 is located between the fifth magnet insertion hole 15 and the first cutout 21 that are adjacent to each other and disposed in the V-shape. In other words, the first cutout 21 is formed so as to sandwich the seventh bridge portion 37 between the first cutout 21 and the fifth magnet insertion hole 15.

The eighth bridge portion 38 is provided between the end of the sixth magnet insertion hole 16 on the C1 side and the end of the second cutout 22 on the R1 side. That is, the eighth bridge portion 38 is located between the sixth magnet insertion hole 16 and the second cutout 22 that are adjacent to each other and disposed in the V-shape. In other words, the second cutout 22 is formed so as to sandwich the eighth bridge portion 38 between the second cutout 22 and the sixth magnet insertion hole 16.

### <Configuration of Permanent Magnet>

The rotor 100 includes permanent magnets 2. The permanent magnet 2 has a rectangular shape when viewed in the Z direction. One permanent magnet 2 is disposed in each of the magnet insertion holes 10. The permanent magnet 2 is, for example, a neodymium magnet. A clearance 10a (see FIG. 2) is formed in a portion of the magnet insertion hole 10 where the permanent magnet 2 is not disposed.

### (Details of Magnet Insertion Hole)

### <Fourth Magnet Insertion Hole>

As shown in FIG. 2, when viewed in the Z direction, the side surface of the fourth magnet insertion hole 14 is provided with a first straight line L4a that forms the fourth bridge portion 34, a second straight line L4b disposed so as to extend in a direction along the long side of the permanent magnet 2, a first arc-shaped portion L4c connected to the first straight line L4a and disposed between the first straight line L4a and the second straight line L4b, a second arc-shaped portion L4d connected to the second straight line L4b and disposed between the first straight line L4a and the second straight line L4b, and an inter-arc straight line portion L4e connected to the first arc-shaped portion L4c and to the second arc-shaped portion L4d. That is, on the side surface of the fourth magnet insertion hole 14, the first straight line L4a, the first arc-shaped portion L4c, the inter-arc straight line portion L4e, the second arc-shaped portion L4d, and the second straight line L4b are connected in this order.

The first arc-shaped portion L4c is connected to the first straight line L4a so that the first straight line L4a is a tangent to the first arc-shaped portion L4c in order that the connection portion between the first straight line L4a and the first arc-shaped portion L4c is not angular. That is, the first straight line L4a and the first arc-shaped portion L4c are smoothly connected. The first arc-shaped portion L4c is connected to the inter-arc straight line portion L4e so that the inter-arc straight line portion L4e is a tangent to the first arc-shaped portion L4c in order that the connection portion between the inter-arc straight line portion L4e and the first arc-shaped portion L4c is not angular. That is, the inter-arc straight line portion L4e and the first arc-shaped portion L4c are smoothly connected. The second arc-shaped portion L4d is connected to the inter-arc straight line portion L4e so that the inter-arc straight line portion L4e is a tangent to the second arc-shaped portion L4d in order that the connection portion between the inter-arc straight line portion L4e and the second arc-shaped portion L4d is not angular. That is, the inter-arc straight line portion L4e and the second arc-shaped portion L4d are smoothly connected. The second arc-shaped portion L4d is connected to the second straight line L4b so that the second straight line L4b is a tangent to the second arc-shaped portion L4d in order that the connection portion between the second straight line L4b and the second arc-shaped portion L4d is not angular. That is, the second straight line L4b and the second arc-shaped portion L4d are smoothly connected.

An angle A41 formed by the first straight line L4a and the second straight line L4b is an acute angle. That is, the first arc-shaped portion L4c, the second arc-shaped portion L4d, and the inter-arc straight line portion L4e are provided between the first straight line L4a and the second straight line L4b that form the angle A41.

An angle A42 formed by the first straight line L4a and the inter-arc straight line portion L4e is an obtuse angle. That is, the inter-arc straight line portion L4e is disposed so that the angle A42 formed by the inter-arc straight line portion L4e and the first straight line L4a is the obtuse angle. An angle A43 formed by the second straight line L4b and the inter-arc straight line portion L4e is an obtuse angle. That is, the inter-arc straight line portion L4e is disposed so that the angle A43 formed by the inter-arc straight line portion L4e and the second straight line L4b is the obtuse angle.

The first straight line L4a is provided so as to adjoin the clearance 10a in the fourth magnet insertion hole 14 where the permanent magnet 2 is not disposed. The first straight line L4a is provided so as to form the fourth bridge portion 34 located between the fourth magnet insertion hole 14 and the second magnet insertion hole 12 that are adjacent to each other and disposed in the V-shape.

### <Sixth Magnet Insertion Hole>

When viewed in the Z direction, the side surface of the sixth magnet insertion hole 16 is provided with a first straight line L6a that forms the eighth bridge portion 38, a second straight line L6b disposed so as to extend in a direction along the long side of the permanent magnet 2, a first arc-shaped portion L6c connected to the first straight line L6a and disposed between the first straight line L6a and the second straight line L6b, a second arc-shaped portion L6d connected to the second straight line L6b and disposed between the first straight line L6a and the second straight line L6b, and an inter-arc straight line portion L6e connected to the first arc-shaped portion L6c and to the second arc-shaped portion L6d. That is, on the side surface of the sixth magnet insertion hole 16, the first straight line L6a, the first arc-shaped portion L6c, the inter-arc straight line portion L6e, the second arc-shaped portion L6d, and the second straight line L6b are connected in this order.

The first arc-shaped portion L6c is connected to the first straight line L6a so that the first straight line L6a is a tangent to the first arc-shaped portion L6c in order that the connection portion between the first straight line L6a and the first arc-shaped portion L6c is not angular. That is, the first straight line L6a and the first arc-shaped portion L6c are smoothly connected. The first arc-shaped portion L6c is connected to the inter-arc straight line portion L6e so that the inter-arc straight line portion L6e is a tangent to the first arc-shaped portion L6c in order that the connection portion between the inter-arc straight line portion L6e and the first arc-shaped portion L6c is not angular. That is, the inter-arc straight line portion L6e and the first arc-shaped portion L6c are smoothly connected. The second arc-shaped portion L6d is connected to the inter-arc straight line portion L6e so that the inter-arc straight line portion L6e is a tangent to the second arc-shaped portion L6d in order that the connection portion between the inter-arc straight line portion L6e and the second arc-shaped portion L6d is not angular. That is, the inter-arc straight line portion L6e and the second arc-shaped portion L6d are smoothly connected. The second arc-shaped portion L6d is connected to the second straight line L6b so that the second straight line L6b is a tangent to the second arc-shaped portion L6d in order that the connection portion between the second straight line L6b and the second arc-shaped portion L6d is not angular. That is, the second straight line L6b and the second arc-shaped portion L6d are smoothly connected.

An angle A61 formed by the first straight line L6a and the second straight line L6b is an acute angle. That is, the first arc-shaped portion L6c, the second arc-shaped portion L6d, and the inter-arc straight line portion L6e are provided between the first straight line L6a and the second straight line L6b that form the angle A61.

An angle A62 formed by the first straight line L6a and the inter-arc straight line portion L6e is an obtuse angle. That is, the inter-arc straight line portion L6e is disposed so that the angle A62 formed by the inter-arc straight line portion L6e and the first straight line L6a is the obtuse angle. An angle A63 formed by the second straight line L6b and the inter-arc straight line portion L6e is an obtuse angle. That is, the inter-arc straight line portion L6e is disposed so that the angle A63 formed by the inter-arc straight line portion L6e and the second straight line L6b is the obtuse angle.

The first straight line L6a is provided so as to adjoin the clearance 10a in the sixth magnet insertion hole 16 where the permanent magnet 2 is not disposed. The first straight line L6a is provided so as to form the eighth bridge portion 38 located between the sixth magnet insertion hole 16 and the second cutout 22 that are adjacent to each other and disposed in the V-shape.

### (Details of Cutout)

When viewed in the Z direction, the side surface of the second cutout 22 is provided with a first straight line L2a that forms the eighth bridge portion 38, a second straight line L2b disposed so as to face the first straight line L2a in the second cutout 22, a first arc-shaped portion L2c connected to the first straight line L2a and disposed between the first straight line L2a and the second straight line L2b, a second arc-shaped portion L2d connected to the second straight line L2b and disposed between the first straight line L2a and the second straight line L2b, and an inter-arc straight line portion L2e connected to the first arc-shaped portion L2c and to the second arc-shaped portion L2d. That is, on the side surface of the second cutout 22, the first straight line L2a, the first arc-shaped portion L2c, the inter-arc straight line portion L2e, the second arc-shaped portion L2d, and the second straight line L2b are connected in this order.

The first arc-shaped portion L2c is connected to the first straight line L2a so that the first straight line L2a is a tangent to the first arc-shaped portion L2c in order that the connection portion between the first straight line L2a and the first arc-shaped portion L2c is not angular. That is, the first straight line L2a and the first arc-shaped portion L2c are smoothly connected. The first arc-shaped portion L2c is connected to the inter-arc straight line portion L2e so that the inter-arc straight line portion L2e is a tangent to the first arc-shaped portion L2c in order that the connection portion between the inter-arc straight line portion L2e and the first arc-shaped portion L2c is not angular. That is, the inter-arc straight line portion L2e and the first arc-shaped portion L2c are smoothly connected. The second arc-shaped portion L2d is connected to the inter-arc straight line portion L2e so that the inter-arc straight line portion L2e is a tangent to the second arc-shaped portion L2d in order that the connection portion between the inter-arc straight line portion L2e and the second arc-shaped portion L2d is not angular. That is, the inter-arc straight line portion L2e and the second arc-shaped portion L2d are smoothly connected. The second arc-shaped portion L2d is connected to the second straight line L2b so that the second straight line L2b is a tangent to the second arc-shaped portion L2d in order that the connection portion between the second straight line L2b and the second arc-shaped portion L2d is not angular. That is, the second straight line L2b and the second arc-shaped portion L2d are smoothly connected.

An angle A21 formed by the first straight line L2a and the second straight line L2b is an acute angle. That is, the first arc-shaped portion L2c, the second arc-shaped portion L2d, and the inter-arc straight line portion L2e are provided between the first straight line L2a and the second straight line L2b that form the angle A21.

An angle A22 formed by the first straight line L2a and the inter-arc straight line portion L2e is an obtuse angle. That is, the inter-arc straight line portion L2e is disposed so that the angle A22 formed by the inter-arc straight line portion L2e and the first straight line L2a is the obtuse angle. An angle A23 formed by the second straight line L2b and the inter-arc straight line portion L2e is an obtuse angle. That is, the inter-arc straight line portion L2e is disposed so that the angle A23 formed by the inter-arc straight line portion L2e and the second straight line L2b is the obtuse angle.

The first straight line L2a is provided so as to form the eighth bridge portion 38 located between the second cutout 22 and the sixth magnet insertion hole 16 that are adjacent to each other and disposed in the V-shape.

(Change in Position of Arc-shaped Portion as Radius of Circle Corresponding to Arc-shaped Portion Changes within Tolerance Range) Referring to FIGS. 2, 3, and 5, description will be given of a change in the position of an arc-shaped portion CA as a radius R of a circle corresponding to the arc-shaped portion CA changes within a tolerance range ΔR (manufacturing deviation range).

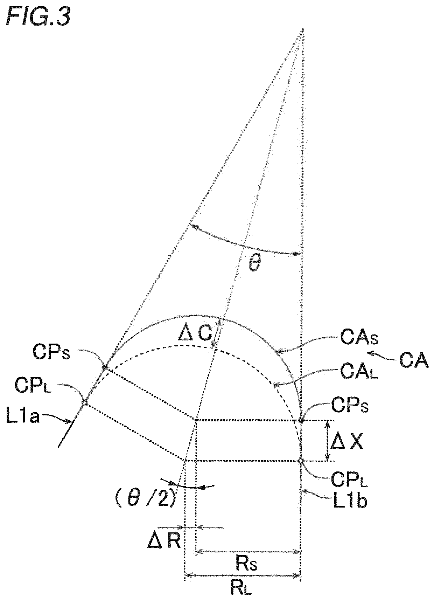

As shown in FIG. 3, it is assumed that the arc-shaped portion CA is connected to a straight line L1a and a straight line L1b so that the straight line L1a and the straight line L1b are tangents to the circle corresponding to the arc-shaped portion CA, and that the radius R of the circle corresponding to the arc-shaped portion CA changes within the tolerance range ΔR (manufacturing deviation range).

In this case, the position of a connection portion CP_{S} where an arc-shaped portion CA_{S} when the radius R of the circle is a minimum value R_{S} of the tolerance range ΔR (manufacturing deviation range) and the straight line L1a are connected and the position of a connection portion CP_{L} where an arc-shaped portion CA_{L} when the radius R of the circle is a maximum value R_{L} of the tolerance range ΔR and the straight line L1a are connected change by ΔX along the extension direction of the straight line L1a. Similarly, the position of a connection portion CP_{S} where the arc-shaped portion CA_{S} when the radius R of the circle is the minimum value R_{S} of the tolerance range ΔR and the straight line L1b are connected and the position of a connection portion CP_{L} where the arc-shaped portion CA_{L} when the radius R of the circle is the maximum value R_{L} of the tolerance range ΔR and the straight line L1b are connected change by ΔX along the extension direction of the straight line L1b. That is, as the radius R of the circle corresponding to the arc-shaped portion CA changes within the tolerance range ΔR (minimum value R_{S} to maximum value R_{L}), the position of the arc-shaped portion CA changes by ΔC in the protruding direction of the arc-shaped portion CA. Note that ΔC = ΔX / cos(θ / 2) - ΔR holds.

When the straight line L1a and the straight line L1b form an angle θ, ΔX = ΔR / tan(θ / 2) holds. According to the above relational expression, ΔX decreases as the angle θ increases within a range in which the angle θ is larger than 0° and smaller than 180°. That is, the amount of change ΔC in the position of the arc-shaped portion CA in the protruding direction of the arc-shaped portion CA as the radius R of the circle corresponding to the arc-shaped portion CA changes within the tolerance range ΔR (manufacturing deviation range) is smaller when the angle θ is an obtuse angle than when the angle θ is an acute angle.

Therefore, in the configuration in which the first arc-shaped portion L4c, the second arc-shaped portion L4d, and the inter-arc straight line portion L4e are provided between the first straight line L4a and the second straight line L4b as shown in FIG. 2, the angle A42 formed by the first straight line L4a and the inter-arc straight line portion L4e is the obtuse angle. Thus, the amount of change in the position of the first arc-shaped portion L4c that changes as the radius R of the circle corresponding to the first arc-shaped portion L4c changes within the tolerance range ΔR (manufacturing deviation range) is relatively small. The angle A43 formed by the second straight line L4b and the inter-arc straight line portion L4e is the obtuse angle. Thus, the amount of change in the position of the second arc-shaped portion L4d that changes as the radius R of the circle corresponding to the second arc-shaped portion L4d changes within the tolerance range ΔR is relatively small. In FIG. 2, continuous lines show the first arc-shaped portion L4c when the radius R of the circle corresponding to the first arc-shaped portion L4c is the minimum value R_{S} of the tolerance range ΔR and the second arc-shaped portion L4d when the radius R of the circle corresponding to the second arc-shaped portion L4d is the minimum value R_{S} of the tolerance range ΔR, and dotted lines show the first arc-shaped portion L4c when the radius R of the circle corresponding to the first arc-shaped portion L4c is the maximum value R_{L} of the tolerance range ΔR and the second arc-shaped portion L4d when the radius R of the circle corresponding to the second arc-shaped portion L4d is the maximum value R_{L} of the tolerance range ΔR. The details about the amounts of change in the positions of the above arc-shaped portions in the configuration in which the first arc-shaped portion L4c, the second arc-shaped portion L4d, and the inter-arc straight line portion L4e are provided between the first straight line L4a and the second straight line L4b are similar to those in the configuration in which the first arc-shaped portion L6c, the second arc-shaped portion L6d, and the inter-arc straight line portion L6e are provided between the first straight line L6a and the second straight line L6b and in the configuration in which the first arc-shaped portion L2c, the second arc-shaped portion L2d, and the inter-arc straight line portion L2e are provided between the first straight line L2a and the second straight line L2b.

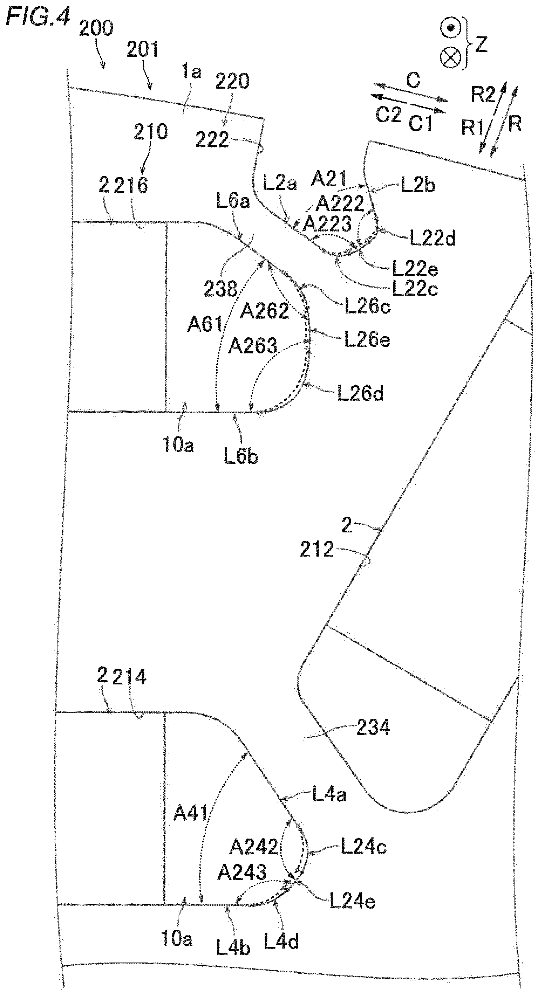

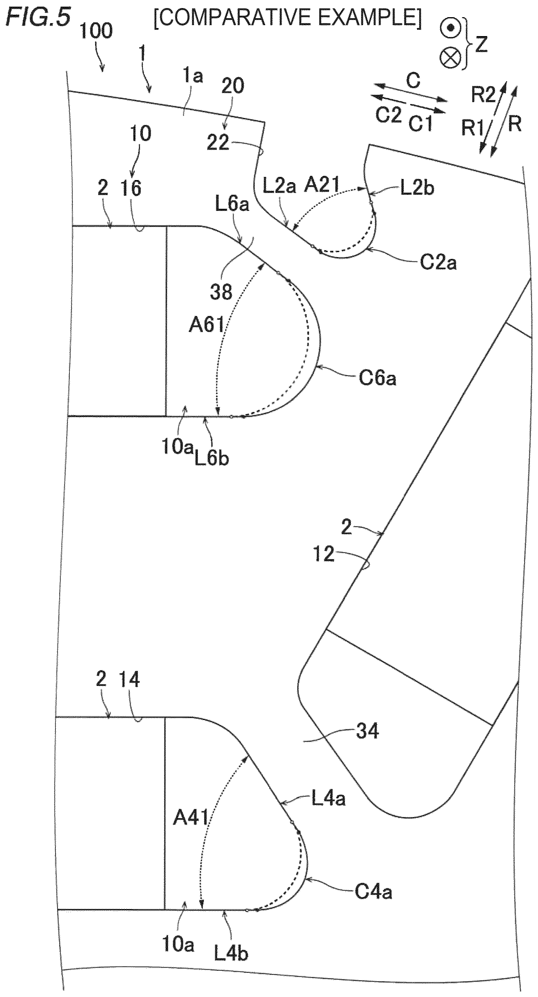

In a configuration in which the first arc-shaped portion L4c, the second arc-shaped portion L4d, and the inter-arc straight line portion L4e are not provided between the first straight line L4a and the second straight line L4b but only one arc-shaped portion C4a is provided therebetween as in a comparative example of FIG. 5, the angle A41 formed by the first straight line L4a and the second straight line L4b is an acute angle. Thus, the amount of change in the position of the arc-shaped portion C4a that changes as the radius R of the circle corresponding to the arc-shaped portion C4a changes within the tolerance range ΔR (manufacturing deviation range) is relatively large. In FIG. 4, a continuous line shows the arc-shaped portion C4a when the radius R of the circle corresponding to the arc-shaped portion C4a is the minimum value R_{S} of the tolerance range ΔR, and a dotted line shows the arc-shaped portion C4a when the radius R of the circle corresponding to the arc-shaped portion C4a is the maximum value R_{L} of the tolerance range ΔR. The details about the amount of change in the position of the above arc-shaped portion in the configuration in which the only one arc-shaped portion C4a is provided between the first straight line L4a and the second straight line L4b are similar to those in a configuration in which only one arc-shaped portion is provided between the first straight line L6a and the second straight line L6b and in a configuration in which only one arc-shaped portion is provided between the first straight line L2a and the second straight line L2b.

### [Effects of First Embodiment]

The first embodiment has the following effects.

In the first embodiment, as described above, when viewed in the Z direction, the side surface of the fourth magnet insertion hole 14 is provided with the first straight line L4a that forms the fourth bridge portion 34, the second straight line L4b disposed so as to extend in the direction along the long side of the permanent magnet 2, the first arc-shaped portion L4c connected to the first straight line L4a and disposed between the first straight line L4a and the second straight line L4b, the second arc-shaped portion L4d connected to the second straight line L4b and disposed between the first straight line L4a and the second straight line L4b, and the inter-arc straight line portion L4e connected to the first arc-shaped portion L4c and to the second arc-shaped portion L4d. Therefore, two arc-shaped portions, that is, the first arc-shaped portion L4c connected to the first straight line L4a and to the inter-arc straight line portion L4e and the second arc-shaped portion L4d connected to the second straight line L4b and to the inter-arc straight line portion L4e, can be formed between the first straight line L4a and the second straight line L4b on the side surface of the fourth magnet insertion hole 14. In this case, the inter-arc straight line portion L4e extends in a direction intersecting the first straight line L4a and the second straight line L4b. Thus, the angle A42 formed by the first straight line L4a and the inter-arc straight line portion L4e and the angle A43 formed by the second straight line L4b and the inter-arc straight line portion L4e are larger than the angle A41 formed by the first straight line L4a and the second straight line L4b. The amount of change ΔC in the position of the arc-shaped portion CA in the protruding direction of the arc-shaped portion CA as the radius R of the circle corresponding to the arc-shaped portion CA changes within the tolerance range ΔR (manufacturing deviation range) increases as the absolute value of the angle θ formed by a straight line connected to one end of the arc-shaped portion CA and a straight line connected to the other end of the arc-shaped portion is closer to 0° (decreases). Therefore, the amount of change in the shape of the fourth bridge portion 34 formed by the first straight line L4a as the radius R of the circle corresponding to the first arc-shaped portion L4c and the radius R of the circle corresponding to the second arc-shaped portion L4d each change within the tolerance range ΔR can be reduced compared to the case where only one arc-shaped portion is provided between the first straight line L4a and the second straight line L4b on the side surface of the fourth magnet insertion hole 14. As a result, it is possible to suppress the increase in the variation in the mechanical strength of the rotor core 1 and the occurrence of magnetic flux leakage at the fourth bridge portion 34 due to the change in the shape of the fourth bridge portion 34. The same effect as that in the fourth magnet insertion hole 14 described above can be obtained in the sixth magnet insertion hole 16 and the second cutout 22 as well.

In the first embodiment, as described above, the angle A41 formed by the first straight line L4a and the second straight line L4b is the acute angle. Since the angle A41 formed by the first straight line L4a and the second straight line L4b is the relatively small acute angle, the amount of change in the shape of the fourth bridge portion 34 formed by the first straight line L4a as the radius R of the circle corresponding to the first arc-shaped portion L4c and the radius R of the circle corresponding to the second arc-shaped portion L4d each change within the tolerance range ΔR is relatively large when only one arc-shaped portion is provided between the first straight line L4a and the second straight line L4b on the side surface of the fourth magnet insertion hole 14. Therefore, the amount of change in the shape of the fourth bridge portion 34 formed by the first straight line L4a as the radius R of the circle corresponding to the first arc-shaped portion L4c and the radius R of the circle corresponding to the second arc-shaped portion L4d each change within the tolerance range ΔR (manufacturing deviation range) can be reduced effectively. The same effect as that in the fourth magnet insertion hole 14 described above can be obtained in the sixth magnet insertion hole 16 and the second cutout 22 as well.

In the first embodiment, as described above, the angle A42 formed by the first straight line L4a and the inter-arc straight line portion L4e is the obtuse angle. The angle A43 formed by the second straight line L4b and the inter-arc straight line portion L4e is the obtuse angle. Since the angle A42 formed by the first straight line L4a and the inter-arc straight line portion L4e and the angle A43 formed by the second straight line L4b and the inter-arc straight line portion L4e are the relatively large obtuse angles, the amount of change in the shape of the fourth bridge portion 34 formed by the first straight line L4a as the radius R of the circle corresponding to the first arc-shaped portion L4c and the radius R of the circle corresponding to the second arc-shaped portion L4d each change within the tolerance range ΔR (manufacturing deviation range) can be reduced sufficiently. The same effect as that in the fourth magnet insertion hole 14 described above can be obtained in the sixth magnet insertion hole 16 and the second cutout 22 as well.

In the first embodiment, as described above, the first straight line L4a is provided so as to adjoin the clearance 10a in the fourth magnet insertion hole 14 where the permanent magnet 2 is not disposed. Since the fourth bridge portion 34 formed by the first straight line L4a is provided so as to adjoin the clearance 10a in the fourth magnet insertion hole 14, the change in the shape affects the mechanical strength of the rotor core 1 particularly greatly. Therefore, the amount of change in the shape of the fourth bridge portion 34 formed by the first straight line L4a as the radius R of the circle corresponding to the first arc-shaped portion L4c and the radius R of the circle corresponding to the second arc-shaped portion L4d each change within the tolerance range ΔR (manufacturing deviation range) can be reduced effectively. The same effect as that in the fourth magnet insertion hole 14 described above can be obtained in the sixth magnet insertion hole 16 as well.

In the first embodiment, as described above, the first straight line L4a is provided so as to form the fourth bridge portion 34 located between the fourth magnet insertion hole 14 and the second magnet insertion hole 12 that are adjacent to each other and disposed in the V-shape. Since the angle A41 formed by the second straight line L4b and the first straight line L4a that forms the fourth bridge portion 34 located between the fourth magnet insertion hole 14 and the second magnet insertion hole 12 that are adjacent to each other and disposed in the V-shape is the relatively small acute angle, the amount of change in the shape of the fourth bridge portion 34 formed by the first straight line L4a as the radius R of the circle corresponding to the first arc-shaped portion L4c and the radius R of the circle corresponding to the second arc-shaped portion L4d each change within the tolerance range ΔR (manufacturing deviation range) can be reduced effectively.

### [Second Embodiment]

The configuration of a rotor 200 according to a second embodiment of the present invention will be described with reference to FIG. 5. In the figure, the same parts as those in the first embodiment are denoted by the same signs.

### (Overall Configuration of Rotor)

As shown in FIG. 5, the rotor 200 includes a rotor core 201.

### <Configuration of Magnet Insertion Hole>

The rotor core 201 includes magnet insertion holes 210. The magnet insertion holes 210 include a second magnet insertion hole 212, a fourth magnet insertion hole 214, and a sixth magnet insertion hole 216.

### <Configuration of Cutout>

The rotor core 201 includes cutouts 220. The cutouts 220 include a second cutout 222.

### <Configuration of Bridge Portion>

The rotor core 201 includes bridge portions 230. The bridge portions 230 include a fourth bridge portion 234 and an eighth bridge portion 238.

### (Details of Magnet Insertion Hole)

### <Fourth Magnet Insertion Hole>

As shown in FIG. 5, when viewed in the Z direction, the side surface of the fourth magnet insertion hole 214 is provided with a first straight line L4a that forms the fourth bridge portion 234, a second straight line L4b disposed so as to extend in a direction along the long side of the permanent magnet 2, a first arc-shaped portion L24c connected to the first straight line L4a and disposed between the first straight line L4a and the second straight line L4b, a second arc-shaped portion L24d connected to the second straight line L4b and disposed between the first straight line L4a and the second straight line L4b, and an inter-arc curved line portion L24e connected to the first arc-shaped portion L24c and to the second arc-shaped portion L24d and having a smaller curvature than the first arc-shaped portion L24c and the second arc-shaped portion L24d. That is, on the side surface of the fourth magnet insertion hole 214, the first straight line L4a, the first arc-shaped portion L24c, the inter-arc curved line portion L24e, the second arc-shaped portion L24d, and the second straight line L4b are connected in this order.

The first arc-shaped portion L24c is connected to the first straight line L4a so that the first straight line L4a is a tangent to the first arc-shaped portion L24c in order that the connection portion between the first straight line L4a and the first arc-shaped portion L24c is not angular. That is, the first straight line L4a and the first arc-shaped portion L24c are smoothly connected. The first arc-shaped portion L24c is connected to the inter-arc curved line portion L24e so that the inter-arc curved line portion L24e is a tangent to the first arc-shaped portion L24c in order that the connection portion between the inter-arc curved line portion L24e and the first arc-shaped portion L24c is not angular. That is, the inter-arc curved line portion L24e and the first arc-shaped portion L24c are smoothly connected. The second arc-shaped portion L24d is connected to the inter-arc curved line portion L24e so that the inter-arc curved line portion L24e is a tangent to the second arc-shaped portion L24d in order that the connection portion between the inter-arc curved line portion L24e and the second arc-shaped portion L24d is not angular. That is, the inter-arc curved line portion L24e and the second arc-shaped portion L24d are smoothly connected. The second arc-shaped portion L24d is connected to the second straight line L4b so that the second straight line L4b is a tangent to the second arc-shaped portion L24d in order that the connection portion between the second straight line L4b and the second arc-shaped portion L24d is not angular. That is, the second straight line L4b and the second arc-shaped portion L24d are smoothly connected.

In order to smoothly connect the inter-arc curved line portion L24e and the first arc-shaped portion L24c and to smoothly connect the inter-arc curved line portion L24e and the second arc-shaped portion L24d, the first arc-shaped portion L24c, the inter-arc curved line portion L24e, and the second arc-shaped portion L24d are formed so that 2 × R ≥ r1 + r2 + (L / cos(2 - θ / 2)) holds, where r1 is the radius of the first arc-shaped portion L24c, r2 is the radius of the second arc-shaped portion L24d, L is the distance between the center of the circle corresponding to the first arc-shaped portion L24c and the center of the circle corresponding to the second arc-shaped portion L24d, R is the radius of the inter-arc curved line portion L24e, and θ is the angle formed by the first straight line L4a and the second straight line L4b.

An angle A242 formed by the first straight line L4a and the tangent at the connection portion between the inter-arc curved line portion L24e and the first arc-shaped portion L24c is an obtuse angle. An angle A243 formed by the second straight line L4b and the tangent at the connection portion between the inter-arc curved line portion L24e and the second arc-shaped portion L24d is an obtuse angle.

### <Sixth Magnet Insertion Hole>

When viewed in the Z direction, the side surface of the sixth magnet insertion hole 216 is provided with a first straight line L6a that forms the eighth bridge portion 238, a second straight line L6b disposed so as to extend in a direction along the long side of the permanent magnet 2, a first arc-shaped portion L26c connected to the first straight line L6a and disposed between the first straight line L6a and the second straight line L6b, a second arc-shaped portion L26d connected to the second straight line L6b and disposed between the first straight line L6a and the second straight line L6b, and an inter-arc curved line portion L26e connected to the first arc-shaped portion L26c and to the second arc-shaped portion L26d and having a smaller curvature than the first arc-shaped portion L26c and the second arc-shaped portion L26d. That is, on the side surface of the sixth magnet insertion hole 216, the first straight line L6a, the first arc-shaped portion L26c, the inter-arc curved line portion L26e, the second arc-shaped portion L26d, and the second straight line L6b are connected in this order.

The first straight line L6a and the first arc-shaped portion L26c are smoothly connected in order that the connection portion between the first straight line L6a and the first arc-shaped portion L26c is not angular. The inter-arc curved line portion L26e and the first arc-shaped portion L26c are smoothly connected in order that the connection portion between the inter-arc curved line portion L26e and the first arc-shaped portion L26c is not angular. The inter-arc curved line portion L26e and the second arc-shaped portion L26d are smoothly connected in order that the connection portion between the inter-arc curved line portion L26e and the second arc-shaped portion L26d is not angular. The second straight line L4b and the second arc-shaped portion L26d are smoothly connected in order that the connection portion between the second straight line L6b and the second arc-shaped portion L26d is not angular.

In order to smoothly connect the inter-arc curved line portion L26e and the first arc-shaped portion L26c and to smoothly connect the inter-arc curved line portion L26e and the second arc-shaped portion L26d, the first arc-shaped portion L26c, the inter-arc curved line portion L26e, and the second arc-shaped portion L26d are formed so that 2 × R ≥ r1 + r2 + (L / cos(2 - θ / 2)) holds, where r1 is the radius of the first arc-shaped portion L26c, r2 is the radius of the second arc-shaped portion L26d, L is the distance between the center of the circle corresponding to the first arc-shaped portion L26c and the center of the circle corresponding to the second arc-shaped portion L26d, R is the radius of the inter-arc curved line portion L26e, and θ is the angle formed by the first straight line L4a and the second straight line L4b.

An angle A262 formed by the first straight line L6a and the tangent at the connection portion between the inter-arc curved line portion L26e and the first arc-shaped portion L26c is an obtuse angle. An angle A263 formed by the second straight line L6b and the tangent at the connection portion between the inter-arc curved line portion L26e and the second arc-shaped portion L26d is an obtuse angle.

### (Details of Cutout)

When viewed in the Z direction, the side surface of the second cutout 222 is provided with a first straight line L2a that forms the eighth bridge portion 238, a second straight line L2b disposed so as to face the first straight line L2a in the second cutout 222, a first arc-shaped portion L22c connected to the first straight line L2a and disposed between the first straight line L2a and the second straight line L2b, a second arc-shaped portion L22d connected to the second straight line L2b and disposed between the first straight line L2a and the second straight line L2b, and an inter-arc curved line portion L22e connected to the first arc-shaped portion L22c and to the second arc-shaped portion L22d and having a smaller curvature than the first arc-shaped portion L22c and the second arc-shaped portion L22d. That is, on the side surface of the second cutout 222, the first straight line L2a, the first arc-shaped portion L22c, the inter-arc curved line portion L22e, the second arc-shaped portion L22d, and the second straight line L2b are connected in this order.

The first arc-shaped portion L22c is connected to the first straight line L2a so that the first straight line L2a is a tangent to the first arc-shaped portion L22c in order that the connection portion between the first straight line L2a and the first arc-shaped portion L22c is not angular. That is, the first straight line L2a and the first arc-shaped portion L22c are smoothly connected. The first arc-shaped portion L22c is connected to the inter-arc curved line portion L22e so that the inter-arc curved line portion L22e is a tangent to the first arc-shaped portion L22c in order that the connection portion between the inter-arc curved line portion L22e and the first arc-shaped portion L22c is not angular. That is, the inter-arc curved line portion L22e and the first arc-shaped portion L22c are smoothly connected. The second arc-shaped portion L22d is connected to the inter-arc curved line portion L22e so that the inter-arc curved line portion L22e is a tangent to the second arc-shaped portion L22d in order that the connection portion between the inter-arc curved line portion L22e and the second arc-shaped portion L22d is not angular. That is, the inter-arc curved line portion L22e and the second arc-shaped portion L22d are smoothly connected. The second arc-shaped portion L22d is connected to the second straight line L2b so that the second straight line L2b is a tangent to the second arc-shaped portion L22d in order that the connection portion between the second straight line L2b and the second arc-shaped portion L22d is not angular. That is, the second straight line L2b and the second arc-shaped portion L22d are smoothly connected.

In order to smoothly connect the inter-arc curved line portion L22e and the first arc-shaped portion L22c and to smoothly connect the inter-arc curved line portion L22e and the second arc-shaped portion L22d, the first arc-shaped portion L22c, the inter-arc curved line portion L22e, and the second arc-shaped portion L22d are formed so that 2 × R ≥ r1 + r2 + (L / cos(2 - θ / 2)) holds, where r1 is the radius of the first arc-shaped portion L22c, r2 is the radius of the second arc-shaped portion L22d, L is the distance between the center of the circle corresponding to the first arc-shaped portion L22c and the center of the circle corresponding to the second arc-shaped portion L26d, R is the radius of the inter-arc curved line portion L22e, and θ is the angle formed by the first straight line L4a and the second straight line L4b.

An angle A222 formed by the first straight line L2a and the tangent at the connection portion between the inter-arc curved line portion L22e and the first arc-shaped portion L22c is an obtuse angle. An angle A223 formed by the second straight line L2b and the tangent at the connection portion between the inter-arc curved line portion L22e and the second arc-shaped portion L22d is an obtuse angle.

The other configuration of the rotor 200 in the second embodiment is the same as that of the rotor 100 in the first embodiment.

### (Effects of Second Embodiment)

The second embodiment has the following effects.

In the second embodiment, as described above, when viewed in the Z direction, the side surface of the fourth magnet insertion hole 214 is provided with the first straight line L4a that forms the fourth bridge portion 234, the second straight line L4b disposed so as to extend in the direction along the long side of the permanent magnet 2, the first arc-shaped portion L24c connected to the first straight line L4a and disposed between the first straight line L4a and the second straight line L4b, the second arc-shaped portion L24d connected to the second straight line L4b and disposed between the first straight line L4a and the second straight line L4b, and the inter-arc curved line portion L24e connected to the first arc-shaped portion L24c and to the second arc-shaped portion L24d and having a smaller curvature than the first arc-shaped portion L24c and the second arc-shaped portion L24d. Therefore, two arc-shaped portions, that is, the first arc-shaped portion L24c connected to the first straight line L4a and to the inter-arc curved line portion L24e and the second arc-shaped portion L24d connected to the second straight line L4b and to the inter-arc curved line portion L24e, can be formed between the first straight line L4a and the second straight line L4b on the side surface of the fourth magnet insertion hole 214. In this case, the tangent at the connection portion between the inter-arc curved line portion L24e and the first arc-shaped portion L24c and the tangent at the connection portion between the inter-arc curved line portion L24e and the second arc-shaped portion L24d extend in directions intersecting the first straight line L4a and the second straight line L4b. Thus, the angle A242 formed by the first straight line L4a and the tangent at the connection portion between the inter-arc curved line portion L24e and the first arc-shaped portion L24c and the angle A243 formed by the second straight line L4b and the tangent at the connection portion between the inter-arc curved line portion L24e and the second arc-shaped portion L24d are larger than the angle A41 formed by the first straight line L4a and the second straight line L4b. The amount of change ΔC in the position of the arc-shaped portion CA in the protruding direction of the arc-shaped portion CA as the radius R of the circle corresponding to the arc-shaped portion CA changes within the tolerance range ΔR (manufacturing deviation range) increases as the absolute value of the angle θ formed by the straight line connected to one end of the arc-shaped portion CA and the tangent at the connection portion between the arc-shaped portion and the curved line connected to the other end of the arc-shaped portion and having a smaller curvature than the arc-shaped portion is closer to 0° (decreases). Therefore, the amount of change in the shape of the fourth bridge portion 234 formed by the first straight line L4a as the radius R of the circle corresponding to the first arc-shaped portion L24c and the radius R of the circle corresponding to the second arc-shaped portion L24d each change within the tolerance range ΔR can be reduced compared to the case where only one arc-shaped portion is provided between the first straight line L4a and the second straight line L4b on the side surface of the fourth magnet insertion hole 214. As a result, it is possible to suppress the increase in the variation in the mechanical strength of the rotor core 1 and the occurrence of magnetic flux leakage at the fourth bridge portion 234 due to the change in the shape of the fourth bridge portion 234. The same effect as that in the fourth magnet insertion hole 214 described above can be obtained in the sixth magnet insertion hole 216 and the second cutout 222 as well.

In the second embodiment, as described above, the angle A242 formed by the first straight line L4a and the tangent at the connection portion between the inter-arc curved line portion L24e and the first arc-shaped portion L24c is the obtuse angle. The angle A243 formed by the second straight line L4b and the tangent at the connection portion between the inter-arc curved line portion L24e and the second arc-shaped portion L24d is the obtuse angle. Since the angle A242 formed by the first straight line L4a and the tangent at the connection portion between the inter-arc curved line portion L24e and the first arc-shaped portion L24c and the angle A243 formed by the second straight line L4b and the tangent at the connection portion between the inter-arc curved line portion L24e and the second arc-shaped portion L24d are the relatively large obtuse angles, the amount of change in the shape of the fourth bridge portion 234 formed by the first straight line L4a as the radius R of the circle corresponding to the first arc-shaped portion L24c and the radius R of the circle corresponding to the second arc-shaped portion L24d each change within the tolerance range ΔR (manufacturing deviation range) can be reduced sufficiently. The same effect as that in the fourth magnet insertion hole 214 described above can be obtained in the sixth magnet insertion hole 216 and the second cutout 222 as well.

The other effects of the second embodiment are similar to those of the first embodiment.

### [Modifications]

The embodiments disclosed herein should be construed as illustrative in all respects and not restrictive. The scope of the present invention is shown by the claims rather than by the above description of the embodiments, and includes all changes (modifications) that fall within the meaning and scope equivalent to the claims.

For example, the first and second embodiments illustrate the example in which the first straight line L2a is provided so as to form the eighth bridge portion 38 (238) located between the second cutout 22 (222) and the sixth magnet insertion hole 16 (216) that are adjacent to each other and disposed in the V-shape. However, the present invention is not limited to this. In the present invention, the first straight line L2a need not be provided so as to form the eighth bridge portion 38 (238) located between the second cutout 22 (222) and the sixth magnet insertion hole 16 (216) that are adjacent to each other and disposed in the V-shape, or the first straight line may be provided so as to form the seventh bridge portion 37 located between the first cutout 21 and the fifth magnet insertion hole 15 that are adjacent to each other and disposed in the V-shape.

The first and second embodiments illustrate the example in which the first straight line L4a is provided so as to form the fourth bridge portion 34 (234) located between the fourth magnet insertion hole 14 (214) and the second magnet insertion hole 12 (212) that are adjacent to each other and disposed in the V-shape and the first straight line L6a is provided so as to form the eighth bridge portion 38 (238) located between the sixth magnet insertion hole 16 (216) and the second cutout 22 (222) that are adjacent to each other and disposed in the V-shape. However, the present invention is not limited to this. In the present invention, the first straight line L4a need not be provided so as to form the fourth bridge portion 34 (234) located between the fourth magnet insertion hole 14 (214) and the second magnet insertion hole 12 (212) that are adjacent to each other and disposed in the V-shape, the first straight line L6a need not be provided so as to form the eighth bridge portion 38 (238) located between the sixth magnet insertion hole 16 (216) and the second cutout 22 (222) that are adjacent to each other and disposed in the V-shape, or the first straight line may be provided so as to form a bridge portion other than the fourth bridge portion 34 (234) and the sixth bridge portion 36 (236) located between the magnet insertion holes that are adjacent to each other and disposed in the V-shape.

The first and second embodiments illustrate the example in which the first straight line L4a is provided so as to adjoin the clearance 10a in the fourth magnet insertion hole 14 (214) where the permanent magnet 2 is not disposed and the first straight line L6a is provided so as to adjoin the clearance 10a in the sixth magnet insertion hole 16 (216) where the permanent magnet 2 is not disposed. However, the present invention is not limited to this. In the present invention, the first straight line L4a need not be provided so as to adjoin the clearance 10a in the fourth magnet insertion hole 14 (214) where the permanent magnet 2 is not disposed, the first straight line L6a need not be provided so as to adjoin the clearance 10a in the sixth magnet insertion hole 16 (216) where the permanent magnet 2 is not disposed, or the first straight line may be provided so as to adjoin the clearance 10a in the magnet insertion hole 10 (210) other than the fourth magnet insertion hole 14 (214) and the sixth magnet insertion hole 16 (216) where the permanent magnet 2 is not disposed.

The first and second embodiments illustrate the example in which the angle A42 (A242) formed by the first straight line L4a and the inter-arc straight line portion L4e (the tangent at the connection portion between the inter-arc curved line portion L24e and the first arc-shaped portion L24c) and the angle A43 (A243) formed by the second straight line L4b and the inter-arc straight line portion L4e (the tangent at the connection portion between the inter-arc curved line portion L24e and the second arc-shaped portion L24d) are the obtuse angles, the angle A62 (A262) formed by the first straight line L6a and the inter-arc straight line portion L6e (the tangent at the connection portion between the inter-arc curved line portion L26e and the first arc-shaped portion L26c) and the angle A63 (A263) formed by the second straight line L6b and the inter-arc straight line portion L6e (the tangent at the connection portion between the inter-arc curved line portion L26e and the second arc-shaped portion L26d) are the obtuse angles, and the angle A22 (A222) formed by the first straight line L2a and the inter-arc straight line portion L2e (the tangent at the connection portion between the inter-arc curved line portion L22e and the first arc-shaped portion L22c) and the angle A23 (A223) formed by the second straight line L2b and the inter-arc straight line portion L2e (the tangent at the connection portion between the inter-arc curved line portion L22e and the second arc-shaped portion L22d) are the obtuse angles. However, the present invention is not limited to this. In the present invention, the angle A42 (A242) formed by the first straight line L4a and the inter-arc straight line portion L4e (the tangent at the connection portion between the inter-arc curved line portion L24e and the first arc-shaped portion L24c) and the angle A43 (A243) formed by the second straight line L4b and the inter-arc straight line portion L4e (the tangent at the connection portion between the inter-arc curved line portion L24e and the second arc-shaped portion L24d) may be acute angles, the angle A62 (A262) formed by the first straight line L6a and the inter-arc straight line portion L6e (the tangent at the connection portion between the inter-arc curved line portion L26e and the first arc-shaped portion L26c) and the angle A63 (A263) formed by the second straight line L6b and the inter-arc straight line portion L6e (the tangent at the connection portion between the inter-arc curved line portion L26e and the second arc-shaped portion L26d) may be acute angles, the angle A22 (A222) formed by the first straight line L2a and the inter-arc straight line portion L2e (the tangent at the connection portion between the inter-arc curved line portion L22e and the first arc-shaped portion L22c) and the angle A23 (A223) formed by the second straight line L2b and the inter-arc straight line portion L2e (the tangent at the connection portion between the inter-arc curved line portion L22e and the second arc-shaped portion L22d) may be acute angles, the angle formed by the first straight line and the inter-arc straight line portion (the tangent at the connection portion between the inter-arc curved line portion and the first arc-shaped portion) and the angle formed by the second straight line and the inter-arc straight line portion (the tangent at the connection portion between the inter-arc curved line portion and the second arc-shaped portion) in the magnet insertion hole 10 (210) other than the fourth magnet insertion hole 14 (214) and the sixth magnet insertion hole 16 (216) may be obtuse angles, or the angle formed by the first straight line and the inter-arc straight line portion (the tangent at the connection portion between the inter-arc curved line portion and the first arc-shaped portion) and the angle formed by the second straight line and the inter-arc straight line portion (the tangent at the connection portion between the inter-arc curved line portion and the second arc-shaped portion) in the first cutout 21 may be obtuse angles.

The first and second embodiments illustrate the example in which the angle A41 formed by the first straight line L4a and the second straight line L4b is the acute angle, the angle A61 formed by the first straight line L6a and the second straight line L6b is the acute angle, and the angle A21 formed by the first straight line L2a and the second straight line L2b is the acute angle. However, the present invention is not limited to this. In the present invention, the angle A41 formed by the first straight line L4a and the second straight line L4b may be an obtuse angle, the angle A61 formed by the first straight line L6a and the second straight line L6b may be an obtuse angle, the angle A21 formed by the first straight line L2a and the second straight line L2b may be an obtuse angle, or the angle formed by the first straight line and the second straight line may be an acute angle in the magnet insertion hole 10 (210) other than the fourth magnet insertion hole 14 (214) and the sixth magnet insertion hole 16 (216) or in the first cutout 21.

### Description of the Reference Numerals

1, 201 rotor core
1a outer circumferential portion (of rotor core)
2 permanent magnet
10, 210 magnet insertion hole
10a clearance (adjacent to permanent magnet on bridge portion side in magnet insertion hole)
30, 230 bridge portion
100, 200 rotor
A41, A61 angle (formed by first straight line and second straight line)
A42, A43 angle (formed by first straight line and inter-arc straight line portion)
A62, A63 angle (formed by second straight line and inter-arc straight line portion)
A242, A243 angle (formed by first straight line and inter-arc curved line portion)
A262, A263 angle (formed by second straight line and inter-arc curved line portion)
L4a, L6a first straight line
L4b, L6b second straight line
L4c, L6c, L24c, L26cfirst arc-shaped portion
L4d, L6d, L24d, L26d second arc-shaped portion
L4e, L6e inter-arc straight line portion
L24e, L26e inter-arc curved line portion

## Claims

1. A rotor comprising:
a rotor core including a magnet insertion hole and a bridge portion provided so as to adjoin the magnet insertion hole; and
a permanent magnet disposed in the magnet insertion hole, wherein when viewed in an axial direction, a side surface of the magnet insertion hole is provided with a first straight line that forms the bridge portion, a second straight line disposed so as to extend in a direction along a long side of the permanent magnet, a first arc-shaped portion connected to the first straight line and disposed between the first straight line and the second straight line, a second arc-shaped portion connected to the second straight line and disposed between the first straight line and the second straight line, and an inter-arc straight line portion connected to the first arc-shaped portion and to the second arc-shaped portion or an inter-arc curved line portion connected to the first arc-shaped portion and to the second arc-shaped portion and having a smaller curvature than the first arc-shaped portion and the second arc-shaped portion.

2. The rotor according to claim 1, wherein an angle formed by the first straight line and the second straight line is an acute angle.

3. The rotor according to claim 1, wherein an angle formed by the first straight line and the inter-arc straight line portion or a tangent at a connection portion between the inter-arc curved line portion and the first arc-shaped portion and an angle formed by the second straight line and the inter-arc straight line portion or a tangent at a connection portion between the inter-arc curved line portion and the second arc-shaped portion are obtuse angles.

4. The rotor according to claim 1, wherein the first straight line is provided so as to adjoin a clearance in the magnet insertion hole where the permanent magnet is not disposed.

5. The rotor according to claim 1, wherein the first straight line is provided so as to form the bridge portion located between the magnet insertion holes that are adjacent to each other and disposed in a V-shape.
